# EUROPEAN PATENT APPLICATION

(11) **EP 2 166 798 A1**
(43) Date of publication of application: **24.03.2010**
(21) Application number: 08290897.1
(22) Date of filing: 23.09.2008
(51) Int. Cl.: H04W 36/14

(54) **Handover between non 3GPP and 3GPP network**

(71) Applicant: Alcatel Lucent, 75008 Paris (FR)
(72) Inventor: Orlandi, Barbara, 91300 Massy (FR); El Mghazli, Yacine, 94110 Arcueil (FR)
(74) Representative: El Manouni, Josiane

(57) **Abstract**

One object of the present invention is a method for handover from a non 3GPP network to a 3GPP network, said non 3GPP network comprising an Access Network referred to as non 3GPP AN, said 3GPP network comprising an Access Network referred to as 3GPP AN and a Packet Core Network referred to as 3GPP CN, said method comprising the steps of:
- tunnelling 3GPP signalling messages for pre-registration and handover preparation, through the non 3GPP AN, between a Mobile Station MS and an Interworking node referred to as IWK connected to each one of a plurality of 3GPP CN nodes by a 3GPP interface between 3GPP AN node and 3GPP CN node,
- upon reception of a thus tunnelled message, IWK selecting, from among said plurality of 3GPP CN nodes, one 3GPP CN node, referred to as target 3GPP CN node, to which said message should be routed to avoid inter - 3GPP CN nodes relocation during execution of said handover,
- IWK routing said message to the thus selected 3GPP CN node.

## Description

The present invention generally relates to mobile communication networks and systems.

Detailed descriptions of mobile communication networks and systems can be found in the literature, such as in particular literature published by standardisation bodies.

One example is WiMAX, a description of which can be found in particular in IEEE 802.16e and WiMAX Forum standards.

In WiMAX, a Mobile Station MS has access, via an Access Service Network ASN, to IP services provided by a Connectivity Service Network CSN. ASN is defined as a set of network functions needed to provide radio access to a WiMAX subscriber. CSN is defined as a set of network functions enabling IP connectivity and WiMAX services to WiMAX subscribers. ASN includes entities such as Base Station BS and ASN Gateway ASN GW. CSN includes entities such as AAA Server, DHCP Server and Home Agent HA.

Another example is 3GPP ("3^{rd} Generation Partnership Project"), a description of which can be found in particular in 3GPP standards.

In 3GPP, a Mobile Station MS (also caled User Equipment UE) has access to IP services via an Access Network AN and a Packet Switched Core Network PS CN providing IP connectivity. Examples of 3GPP AN include GERAN (for GSM/GPRS), UTRAN (for UMTS), and E-UTRAN (for Evolved Packet System EPS). In the following the case of UMTS will more particularly be considred as an example to which the present invention applies; it should however be understood that the present invention is not limited to such example. UTRAN includes entities such as Base Stations (also called Node B), and Radio Network Controllers RNC. The Packet Core Network of UMTS includes entities such as SGSN (Serving GPRS Support Node), GGSN (Gateway GPRS Support Node), and HLR/HSS (Home Location Register/Home Subscriber Server).

Generally, there is a need to ensure service continuity and seamless handover between such different types of networks, such as non 3GPP (such as in particular WiMAX) and 3GPP networks. In particular, there is a need to reduce handover execution time between such networks.

The present invention in particular addresses such needs.

These and other objects of the present invention are achieved, in one aspect of the present invention, by a method for handover from a non 3GPP network to a 3GPP network, said non 3GPP network comprising an Access Network referred to as non 3GPP AN, said 3GPP network comprising an Access Network referred to as 3GPP AN and a Packet Core Network referred to as 3GPP CN, said method comprising the steps of:
- tunnelling 3GPP signalling messages for pre-registration and handover preparation, through the non 3GPP AN, between a Mobile Station MS and an Interworking node referred to as IWK connected to each one of a plurality of 3GPP CN nodes by a 3GPP interface between 3GPP AN node and 3GPP CN node,
- upon reception of a thus tunnelled message, IWK selecting, from among said plurality of 3GPP CN nodes, one 3GPP CN node, referred to as target 3GPP CN node, to which said message should be routed to avoid inter - 3GPP CN nodes relocation during execution of said handover,
- IWK routing said message to the thus selected 3GPP CN node.

These and other objects of the present invention are achieved, in another aspect of the present invention, by entities, such as in particular non 3GPP/3GPP Interworking node IWK, and Mobile Station MS, comprising means for performing such method.

These and other objects of the present invention will become more apparent from the following description taken in conjunction with the accompanying drawings:
- figure 1 illustrates an example of architecture using the present invention,
- figures 2 and 3 illustrate an example of a method for handover using the present invention.

In the following description, the example of handover from WiMAX to 3GPP UTRAN will more particularly be considered, for illustration purpose. It should however be understood that the present invention is not limited to such example, and generally applies to handover from non 3GPP (in particular WiMAX) to 3GPP networks , for instance WiMAX to 3GPP E-UTRAN, to 3GPP GERAN ...etc.

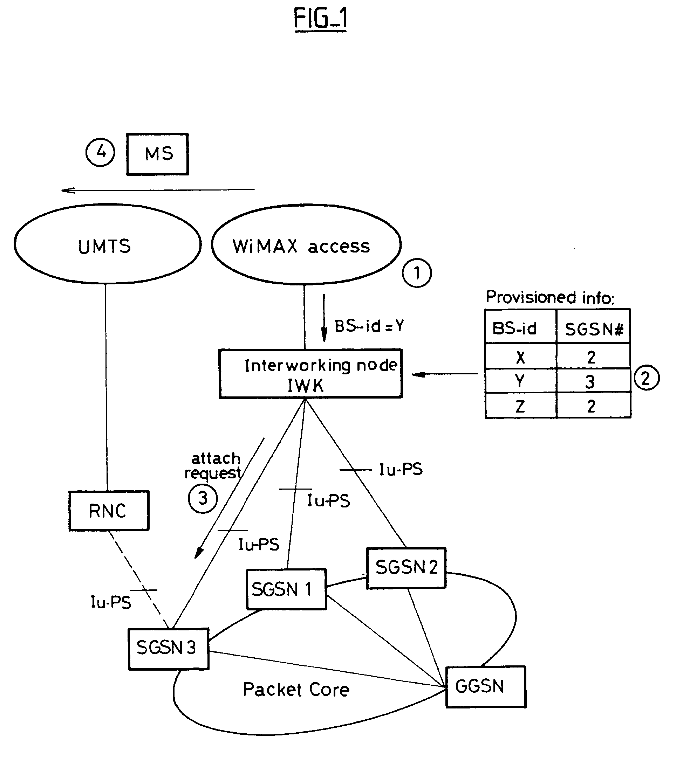

Referring to figure 1, there is illustrated:
- a dual-mode WiMAX /3GPP Mobile Station MS,
- a WiMAX Access Network,
- a 3GPP network such as for example UMTS, in turn comprising: UTRAN Access Network (in turn comprising RNC), and PS Core Network (in turn comprising SGSN, GGSN), RNC and SGSN nodes being connected by 3GPP interface called lu-PS,
- a WiMAX/3GPP interworking node (also called IWK), connected on the one hand to the WiMAX Access Network, and on the other hand to the 3GPP PS Core Network.

In an embodiment, instead of being connected to only one SGSN, IWK is connected to each one of a plurality of SGSNs via 3GPP lu-PS interface. In the illustrated example, IWK is connected in this way to three SGSNs noted SGSN1, SGSN2, SGSN3. These SGSNs are connected on the other hand to a GGSN, in the illustrated example a same GGSN.

In an embodiment, said plurality of SGSNs comprises potential target SGSNs for WiMAX to 3GPP handover. For example, IWK is connected to all the potential target SGSNs for WiMAX to 3GPP handover. The SGSNs assume this IWK to be a real RNC and ignore the fact that it is an interworking node and that it is connected to other SGSNs as well.

In an embodiment, a handover from WiMAX to 3GPP comprises pre-registration and handover preparation, followed by handover execution.

In an embodiment, 3GPP signalling messages for pre-registration and handover preparation are tunnelled through the WiMAX AN, between Mobile Staton MS and IWK.

In an embodiment, information is provided to IWK, enabling IWK to select, from among said plurality of SGSNs, one SGSN (referred to as target SGSN) to which a thus tunnelled message should be routed, to avoid inter-SGSN relocation during handover execution. For example, such information is provided by the MS, for example in a 3GPP Attach Request message. For example, such information comprises information about MS location, for example information about a geographical area such as source and/or target cell for handover. For example, the MS includes information about its WiMAX geographical location, such as BS-Id (Base Station Identity) for instance. For example, based on information about a location or geographical area, IWK selects as target SGSN, the SGSN that covers this location or geographical area. For example, as illustrated in figure 1, IWK selects, as target SGSN, SGSN3 covering the area corresponding to "BS-Id = Y", according to information provisioned in IWK.

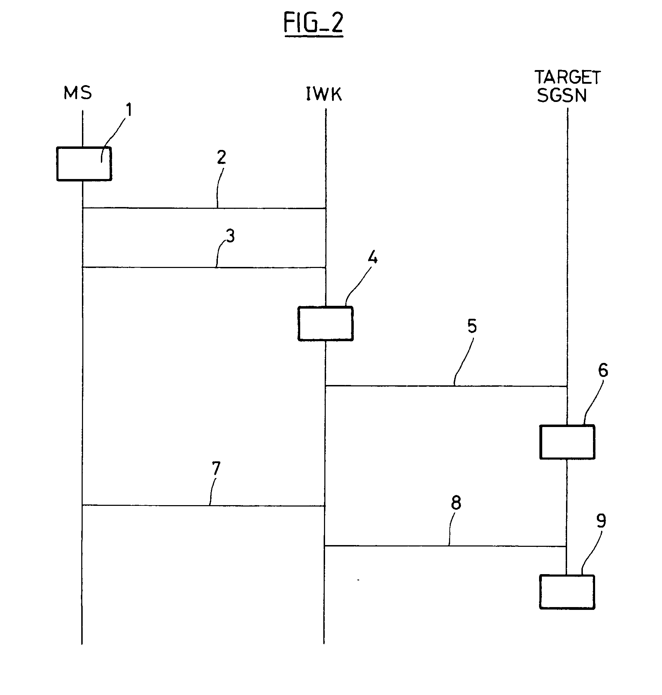

In the example illustrated in figure 2, pre-registration and handover preparation comprise the following steps:
- MS discovers the availability of the 3GPP Access Network (step 1).
- A tunnel is established between MS and IWK node (step 2).
- MS initiates pre-registration by sending a 3GPP Attach Request message (as defined in particular in 3GPP TS 24.008) to IWK, using the established tunnel (step 3).
- IWK selects the target SGSN to which the thus tunnelled message should be routed, for example as described above (step 4).
- IWK then forwards the 3GPP Attach request message to the target SGSN, over lu-PS interface, i.e. via 3GPP RANAP protocol (step 5).
- The SGSN contacts the HLR/HSS and authenticates the MS (step 6).
- MS sends a 3GPP Activate PDP Context Request message (as defined in particular in 3GPP TS 24.008) to IWK, using the established tunnel (step 7).
- The IWK forwards this Activate PDP Context Request message to the target SGSN (step 8) that accepts it (step 9).

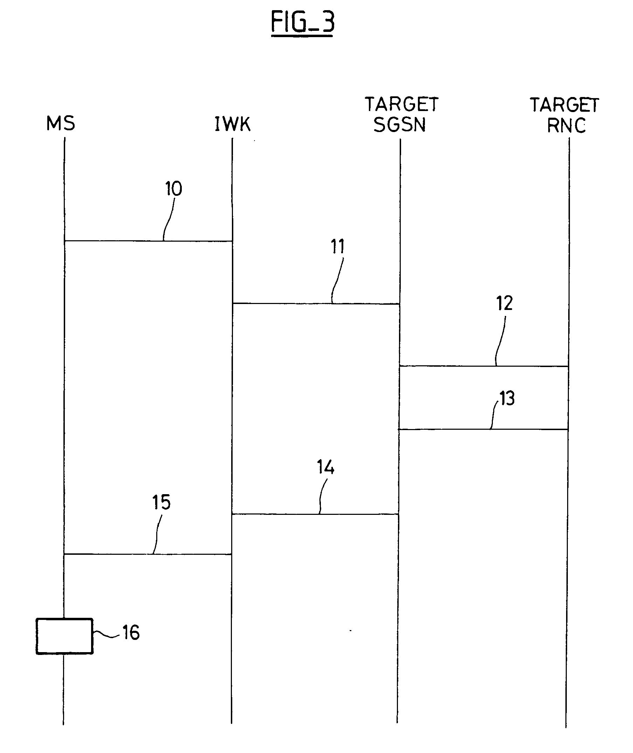

In the example illustrated in figure 3, handover execution comprises the following steps:
- The MS sends a 3GPP message for initiating handover execution (that could be called Handover Request message) to IWK using the tunnel established during pre-registration (step 10).
- Upon reception of this message, IWK initiates a relocation procedure, by sending a 3GPP Relocation Required message (as defined in particular in 3GPP TS 25.413) to the target SGSN selected for example as described above, over 3GPP lu-PS interface (step 11),
- the target SGSN sends a 3GPP Relocation Request message (as defined in particular in 3GPP TS 25.413) to the target RNC for handover, over 3GPP lu-PS interface (step 12),
- upon confirmation that the target RNC can accept the relocation (step 13), the target SGSN sends a 3GPP Relocation Command (as defined in particular in 3GPP TS 25.413) to the IWK, over 3GPP lu-PS interface (step 14),
- IWK in turn notifies the MS (step 15),
- MS tunes to the 3GPP Access Network (UTRAN), step 16.

Such solution in particular allows to noticeably reduce handover execution time between non 3GPP and 3GPP networks.

Such solution in particular allows to save the inter-SGSN relocation steps which would be performed between the SGSN connected to the IWK and the target SGSN, in case the interworking node (such as IWK) would be connected to only one SGSN. Such inter-SGSN relocation steps include, in particular, the following 3GPP message exchanges (as defined in particular in 3GPP TS 29.060):
- Forward Relocation Request
- Forward Relocation Response
- Forward Relocation Complete
- Forward Relocation Complete Ack,
as well as the Location Update towards the HLR/HSS.

This could be roughly estimated as a 2 to 3s saving in a procedure where performance is an issue.

In other words, such solution allows to directly connect the interworking node IWK to the right target SGSN and hence renders unnecessary the time consuming inter-SGSN relocation procedure.

In one aspect, in an embodiment, the present invention provides a method for handover from a non 3GPP network to a 3GPP network, said non 3GPP network comprising an Access Network referred to as non 3GPP AN, said 3GPP network comprising an Access Network referred to as 3GPP AN and a Packet Core Network referred to as 3GPP CN, said method comprising the steps of:
- tunnelling 3GPP signalling messages for pre-registration and handover preparation, through the non 3GPP AN, between a Mobile Station MS and an Interworking node referred to as IWK connected to each one of a plurality of 3GPP CN nodes by a 3GPP interface between 3GPP AN node and 3GPP CN node,
- upon reception of a thus tunnelled message, IWK selecting, from among said plurality of 3GPP CN nodes, one 3GPP CN node, referred to as target 3GPP CN node, to which said message should be routed to avoid inter - 3GPP CN nodes relocation during execution of said handover,
- IWK routing said message to the thus selected 3GPP CN node.

In an embodiment, said method comprises a step of:
- providing to IWK, information enabling said target 3GPP CN node selection,
- IWK selecting said target 3GPP CN node, based on said information.

In an embodiment, said information comprises location or geographical area information.

In an embodiment, said information comprises information about source and/or target cell for handover.

In an embodiment, said method comprises a step of:
- MS providing said information to IWK, in a 3GPP signalling message sent to IWK for pre-registration.

In an embodiment, said 3GPP signalling message corresponds to 3GPP Attach Request message.

In an embodiment, said method comprises a step of:
- IWK selecting as target 3GPP CN node, a 3GPP CN node covering that location or geographical area.

In addition to such method (examples of which have been decribed above), the present invention also provides different entities, such as in particular Mobile Station MS, WiMAX /3GPP Interworking node IWK, comprising means for performing such method.

In another aspect, in an embodiment, the present invention provides an Interworking node IWK, for handover from a non 3GPP network to a 3GPP network, said non 3GPP network comprising an Access Network referred to as non 3GPP AN, said 3GPP network comprising an Access Network referred to as 3GPP AN and a Packet Core Network referred to as 3GPP CN:
- said Interworking node IWK being connected to each one of a plurality of 3GPP CN nodes by a 3GPP interface between 3GPP AN node and 3GPP CN node,
- said Interworking node IWK comprising:
   means for, upon reception of a 3GPP signalling message for pre-registration or handover preparation, tunnelled through the non 3GPP AN, between a Mobile Station MS and IWK, selecting, from among said plurality of 3GPP CN nodes, one 3GPP CN node, referred to as target 3PP CN node, to which said message should be routed to avoid inter - 3GPP CN nodes relocation during handover execution,
   means for routing said 3GPP signalling message to the thus selected 3GPP CN node.

In an embodiment, said interworking node IWK comprises:
- means for receiving information enabling said 3GPP CN node selection,
- means for selecting said 3GPP CN node, based on said information.

In an embodiment, said information comprises location or geographical area information.

In an embodiment, said information comprises information about source and/or target cell for handover.

In an embodiment, said interworking node IWK comprises :
- means for receiving said information from a Mobile Station MS in a 3GPP signalling message sent for pre-registration.

In an embodiment, said 3GPP signalling message corresponds to a 3GPP Attach Request message.

In an embodiment, said interworking node IWK comprises:
- means for selecting as target 3GPP CN node, a 3GPP CN node covering that location or geographical area.

In another aspect, in an embodiment, the present invention provides a Mobile Station MS, comprising, for handover from a non 3GPP network to a 3GPP network, said non 3GPP network comprising an Access Network referred to as non 3GPP AN, said 3GPP network comprising an Access Network referred to as 3GPP AN and a Packet Core Network referred to as 3GPP CN:
- means for providing information enabling a non 3GPP/3GPP Interworking node IWK connected to each of a plurality of 3GPP CN nodes by a 3GPP interface between 3GPP AN node and 3GPP CN node, and to which 3GPP signalling messages for pre-registration and/or handover preparation for non 3GPP to 3GPP handover are tunnelled through the non 3GPP AN, between said Mobile Station MS and said Interworking node IWK, to select from among said plurality of 3GPP CN nodes, one 3GPP CN node, referred to as target 3GPP CN node, to which said message should be routed to avoid inter 3GPP CN nodes relocation during handover execution.

In an embodiment, said information comprises location or geographical area information.

In an embodiment, said information comprises information about source and/or target cell for handover.

In an embodiment, said Mobile Station comprises:
- means for providing said information to IWK, in a 3GPP signalling message sent to IWK during pre-registration.

In an embodiment, said 3GPP signalling message corresponds to a 3GPP Attach Request message.

In another aspect, in an embodiment, the present invention provides a Mobile Station comprising :
- means for tunnelling to a non 3GPP/3GPP Interworking node, through a non 3GPP Access Network, a 3GPP Attach Request message including location or geograpghical area information.

The detailed implementation of the above-mentioned means does not raise any special problem for a person skilled in the art, and therefore such means do not need to be more fully disclosed than has been made above, by their function, for a person skilled in the art.

## Claims

1. A method for handover from a non 3GPP network to a 3GPP network, said non 3GPP network comprising an Access Network referred to as non 3GPP AN, said 3GPP network comprising an Access Network referred to as 3GPP AN and a Packet Core Network referred to as 3GPP CN, said method comprising the steps of:
- tunnelling 3GPP signalling messages for pre-registration and handover preparation, through the non 3GPP AN, between a Mobile Station MS and an Interworking node referred to as IWK connected to each one of a plurality of 3GPP CN nodes by a 3GPP interface between 3GPP AN node and 3GPP CN node,
- upon reception of a thus tunnelled message, IWK selecting, from among said plurality of 3GPP CN nodes, one 3GPP CN node, referred to as target 3GPP CN node, to which said message should be routed to avoid inter - 3GPP CN nodes relocation during execution of said handover,
- IWK routing said message to the thus selected 3GPP CN node.

2. A method according to claim 1, comprising a step of:
- providing to IWK, information enabling said target 3GPP CN node selection,
- IWK selecting said target 3GPP CN node, based on said information.

3. A method according to claim 2, wherein said information comprises location or geographical area information.

4. A method according to claim 2 or 3, wherein said information comprises information about source and/or target cell for handover.

5. A method according to any of claims 2 to 4, comprising a step of:
- MS providing said information to IWK, in a 3GPP signalling message sent to IWK for pre-registration.

6. A method according to claim 5, wherein said 3GPP signalling message corresponds to 3GPP Attach Request message.

7. A method according to any of claims 3 to 6, comprising a step of:
- IWK selecting as target 3GPP CN node, a 3GPP CN node covering that location or geographical area.

8. An Interworking node IWK, for handover from a non 3GPP network to a 3GPP network, said non 3GPP network comprising an Access Network referred to as non 3GPP AN, said 3GPP network comprising an Access Network referred to as 3GPP AN and a Packet Core Network referred to as 3GPP CN:
- said Interworking node IWK being connected to each one of a plurality of 3GPP CN nodes by a 3GPP interface between 3GPP AN node and 3GPP CN node,
- said Interworking node IWK comprising:
means for, upon reception of a 3GPP signalling message for pre-registration or handover preparation, tunnelled through the non 3GPP AN, between a Mobile Station MS and IWK, selecting, from among said plurality of 3GPP CN nodes, one 3GPP CN node, referred to as target 3PP CN node, to which said message should be routed to avoid inter - 3GPP CN nodes relocation during handover execution,
means for routing said 3GPP signalling message to the thus selected 3GPP CN node.

9. An interworking node IWK according to claim 8, comprising:
- means for receiving information enabling said 3GPP CN node selection,
- means for selecting said 3GPP CN node, based on said information.

10. An interworking node IWK according to claim 9, wherein said information comprises location or geographical area information.

11. An interworking node IWK according to claim 10, wherein said information comprises information about source and/or target cell for handover.

12. An interworking node IWK according to any of claims 9 to 11, comprising :
- means for receiving said information from a Mobile Station MS in a 3GPP signalling message sent for pre-registration.

13. An interworking node IWK according to claim 12, wherein said 3GPP signalling message corresponds to a 3GPP Attach Request message.

14. An interworking node IWK according to any of claims 10 to 13, comprising:
- means for selecting as target 3GPP CN node, a 3GPP CN node covering that location or geographical area.

15. A Mobile Station MS, comprising, for handover from a non 3GPP network to a 3GPP network, said non 3GPP network comprising an Access Network referred to as non 3GPP AN, said 3GPP network comprising an Access Network referred to as 3GPP AN and a Packet Core Network referred to as 3GPP CN:
- means for providing information enabling a non 3GPP/3GPP Interworking node IWK connected to each of a plurality of 3GPP CN nodes by a 3GPP interface between 3GPP AN node and 3GPP CN node, and to which 3GPP signalling messages for pre-registration and/or handover preparation for non 3GPP to 3GPP handover are tunnelled through the non 3GPP AN, between said Mobile Station MS and said Interworking node IWK, to select from among said plurality of 3GPP CN nodes, one 3GPP CN node, referred to as target 3GPP CN node, to which said message should be routed to avoid inter 3GPP CN nodes relocation during handover execution.

16. A Mobile Station according to claim 15, wherein said information comprises location or geographical area information.

17. A Mobile Station according to claim 16, wherein said information comprises information about source and/or target cell for handover.

18. A Mobile Station according to any of claims 15 to 17, comprising:
- means for providing said information to IWK, in a 3GPP signalling message sent to IWK during pre-registration.

19. A Mobile Station MS according to claim 18, wherein said 3GPP signalling message corresponds to a 3GPP Attach Request message.
